# EUROPEAN PATENT SPECIFICATION

(11) **EP 4 126 298 B1**
(45) Date of publication and mention of the grant of the patent: **10.09.2025**
(21) Application number: 21714233.0
(22) Date of filing: 30.03.2021
(51) Int. Cl.: B01D 45/08, B01D 45/02

(54) **A SEPARATION UNIT FOR SEPARATING OFF LIQUID COMPONENTS FROM A GAS STREAM**
TRENNEINHEIT ZUR ABTRENNUNG VON FLÜSSIGEN KOMPONENTEN AUS EINEM GASSTROM
UNITÉ DE SÉPARATION POUR SÉPARER DES COMPOSANTS LIQUIDES D'UN FLUX DE GAZ

(30) Priority: 01.04.2020 EP 20167579
(43) Date of publication of application: 08.02.2023
(73) Proprietor: HTE GmbH The High Throughput Experimentation Company, 69123 Heidelberg (DE)
(72) Inventor: KOECHEL, Oliver, 69123 Heidelberg (DE); FRIESS, Markus, 69123 Heidelberg (DE); FINGER, Kurt-Erich, 69214 Eppelheim (DE); FIND, Josef, 83052 Bruckmuehl (DE)
(74) Representative: BASF IP Association
(86) International application number: PCT/EP2021/058306
(87) International publication number: WO 2021/198261

(56) References cited:
- CN-U- 201 783 264
- CN-U- 203 816 363
- CN-U- 205 495 157

## Description

The invention relates to a separation unit for separating off liquid components from a gas stream comprising liquid components.

Such a gas stream comprising liquid components for example emanates from a plant for fluid catalytic cracking of hydrocarbons. In such processes, often a mist arises which contains hydrocarbon droplets in the gaseous product stream. These droplets must be removed from the gaseous product stream in suitable separators.

For this purpose, presently for example coalescence filters are used. However, in laboratory test units for fluid catalytic cracking liquids are only produced in the gram scale. Not only the amount of the liquids produced, but also their composition is needed. If a part of the liquid is removed and kept in the filter material, the remaining liquid may have a different composition than the material retained in the filter. Thus, the separation device must retain the droplets and allow them to return to the bulk liquid.

Particularly commercially relevant fluid catalytic cracking processes usually are carried out at high temperatures between 500 and 550°C and a pressure in the range from 1 to 2.5 bar. On the other hand, as laboratory equipment generally is made of glass, laboratory processes to study fluid catalytic cracking processes are carried out at low pressures which allow using the glass equipment which is not resistive against the pressures usually used in industrial processes. Thus, using general laboratory equipment does not allow to carry out the process at the same conditions as industrial processes.

A phosphoric acid tails gas vapor and liquid separator with a an inlet being connected to a spirally wound pipe inside the separator is disclosed in CN-U 205 495 157.

A laboratory test unit is described for example in ASTM D3907. Another laboratory scale fluid catalytic cracking apparatus is disclosed in US 6,069,012. This apparatus comprises a fluidized bed reactor and a tubular gas space above the fluidized bed. In the gas outlet, a product filter is provided to prevent carry over of catalyst with the gases.

A further test unit for fluid catalytic cracking is described in US-A 2005/003552. Here, the products are transferred from the reactor into a separator and the gaseous product stream which still contains liquid components is transferred into a trap for collecting liquids generated during reaction and liquids exiting from the separator.

By using two separators as in US-A 2005/003552, in laboratory processes for analyzing the fluid catalytic cracking, it is necessary to combine the liquid streams obtained in all separators for determining the composition of the product stream. Further, using standard laboratory equipment does not allow to carry out the process at pressures above 1bar.

Therefore, it is an object of the present invention to provide a separation unit for separating off liquid components from a gas stream comprising liquid components which allows the separation in only one apparatus and which further can be used at elevated pressures.

This object is achieved by a separation unit for separating off liquid components from a gas stream comprising liquid components, which comprises a metallic tube and a baffler, the metallic tube having a first end and a second end and being closed at the first and second ends, the baffler being placed inside the metallic tube, the metallic tube having a side feed at the first end, a closable liquid outlet at the first end and a gas outlet at the second end, wherein a supply pipe is connected to the side fide, the supply pipe having a length which is at least twice as long as the length of a pipe which runs parallel to the axis of the metallic tube from the second end to the side feed.

By using a metallic tube, it is possible to use the separation unit at high pressures and temperatures. Particularly, the separation of liquid components can be carried out in laboratory units at higher pressures as when laboratory equipment is used which usually is made of glass.

Placing the baffler inside the metallic tube and the liquid separator between the baffler and the gas outlet supports particularly separation of small liquid droplets which are comprised in the gas stream. The liquid droplets for example settle on the surfaces of the baffler and agglomerate forming bigger droplets which may flow downwards on the surface of the baffler or release from the baffler and fall down into a liquid collection space from where the liquid components can be removed from the separation unit.

By constructing the separation unit in such a way that it comprises a metallic tube and a baffler which is placed inside the metallic tube a function of the separating unit can be achieved which corresponds to the function of known laboratory units which are made of glass and which cannot be produced in the same way from metal.

The baffler can be made of any suitable material which is resistant against the temperatures which may occur during use of the separation unit. Suitable materials for example are glass, ceramics or metals, particularly metals. In a particularly preferred embodiment, the metallic tube and the baffler are made of the same metals.

Suitable metals which can be used for the metallic tube and, if made of a metal, for the baffler are metals like cast iron or stainless steel, aluminum, brass or copper. Stainless steel is preferred, since fittings and tubes are readily available.

Preferably, the baffler comprises a central axis and 1 to 20 baffle plates, more preferred 1 to 10 baffle plates and particularly 3 to 6 baffle plates.

For separating condensable components from a gas stream, it is necessary to firstly condense the condensable components and afterwards to separate off the condensed and thus liquid components from the gas stream. This is particularly preferred in case the gas stream contains components, which are still gaseous due to the temperature of the gas stream when entering the separation unit. To condense these components, it is preferred to cool the separation unit. This cooling may take place for example by placing the separation unit in a cooling bath. The cooling liquid may either be a component which remains liquid during the separation process or which evaporates during cooling the gas stream. Independently of whether a cooling liquid is used which stays liquid or which evaporates, it is preferred that the cooling liquid flows through the cooling bath and may be cooled in a separate heat exchanger to remove heat dissipated from the gas stream. Particularly if the cooling liquid evaporates at least partly during the cooling process it is preferred to use a cooling bath, which is densely closed to the environment, for example by closing with a cover using a suitable sealing.

Besides using a cooling bath for cooling the gas stream it is also possible to provide the separation unit with a double jacket through which the cooling liquid can flow.

According to the invention, a supply pipe is connected to the side feed, the supply pipe having a length which is at least twice as long as the length of a pipe which runs parallel to the axis of the metallic tube from the second end to the side feed. More preferred, the supply pipe has a length which is at least four times as long as the length of a pipe which runs parallel to the axis of the metallic tube from the second end to the side feed. For this purpose, the supply pipe for example may have any shape differing from a straight shape and have for example an elliptical or curved shape, an undulated shape, a zigzag shape with curved bends, be spirally wound or may have any other shape by which the length being submerged into the cooling liquid in the cooling bath can be elongated compared to a straight line. Independent of the form of the supply pipe, it is preferred to arrange the supply pipe in close proximity of the metallic tube for a compact design of the separation unit. Particularly preferably, the supply pipe is spirally wound and particularly, the supply pipe is spirally wound around the metallic tube. By placing the supply pipe into the cooling bath and providing a certain length of the cooling pipe, the gas stream starts to be cooled in the supply pipe wherein the condensable components in the gas stream start to condense. This results in a two-phase stream comprising a gaseous phase and liquid components which enters the metallic tube.

The baffler preferably is designed in such a way that the axis and the side of the baffle plates showing to the first end enclose an angle in the range from 30 to 90°, more preferred in the range from 60 to 90° and particularly an angle of 90°. By such an angle the gas stream which flows from the first end to the second end is diverted when approaching the baffle plates and droplets of the liquid component impact on the baffle plates due to their inertia and agglomerate forming bigger drops or droplets which fall off the baffle plates and collect at the first end of the separation unit.

Particularly if the baffler comprises more than one baffle, it is further preferred, that the axis and the side of the baffle plates showing to the second end enclose an angle of 90 to 150°, more preferred of 90 to 120°. By an angle which is above 90° liquid droplets which fall on the baffle plate flow to the outward rim of the baffle plate and fall downwards from the outward rim collecting at the first end of the separation unit.

For a sufficient separation of the liquid components from the gas stream, it is particularly preferred when a gap is formed between each baffle plate and the inner wall of the metallic tube which is in the range from 0.05 to 1 mm, more preferred in the range from 0.2 to 0.8 mm and particularly in the range from 0.4 to 0.6 mm. By such a gap the gas stream flowing around the baffle plates is accelerated and only a very small amount of the gas flows directly upwards without being diverted by the baffle plates. Therefore, only a very small amount of liquid is entrained with the gas stream which flows around the baffle plates and does not impact on the baffle plates and deposit on the baffle plates. At least a part of the liquid component which is entrained with the gas stream flowing around a baffle plate, deposits on a following baffle plate. Therefore, using a baffler comprising more than one baffle plate each being designed such that the gap between the baffle plate and the inner wall of the metallic tube is in the above range, allows to remove at most all of the liquid components in the gas stream or even all of the liquid components in the gas stream.

For an essentially complete or even a complete removal of the liquid components in the gas stream, it is further necessary that the distance between two baffle plates is large enough to allow the gas stream to flow into the whole space between the baffle plates and to avoid dead spaces where eddies form and thus no fresh gas stream enter. Such dead spaces result in an essentially laminar flow of the gas stream parallel to the wall of the metallic tube which would result in an entrainment of the liquid components which are not deposited on the first baffle plate. Thereby the distance between two baffle plates depends on the diameter of the metallic tube, the volume flow of the gas stream and the width of the gap between the baffle plates and the inner wall of the metallic tube. Particularly preferably, the ratio of the distance between the outer rim of two adjacent baffle plates and the inner diameter of the metallic tube is in the range from 15 to 1, more preferred in the range from 10 to 1 and particularly in the range from 8 to 2. By such a distance between two baffle plates, the ratio of the length of the metallic tube to the inner diameter of the metallic tube is in the range from 1 to 125, preferably in the range from 5 to 50 and particularly in the range from 5 to 25.

As a small part of the liquid component may be entrained with the gas stream and not deposit on the baffler, the separation unit preferably comprises an additional liquid separator which is placed between the baffler and the gas outlet. The liquid separator can be any suitable liquid separator, for example a filter which only allows the gaseous components to pass. However, it is particularly preferred when the liquid separator is made of fibers which form a fiber pad. Particularly preferably, the liquid separator is made of glass wool. Suitable materials for the fibers also are quarz wool and synthetic fibres which are resistant to the gas and liquid components. It is particularly preferred to use the additional liquid separator if it is to be avoided that some of the liquid gets into the environment or if in a laboratory testing device the total amount of liquid should be detected.

To facilitate production of the separation unit and to allow cleaning of the separation unit after use, it is preferred to design the separation unit dismountable. In one embodiment, the metallic tube is closed on the first end and comprises a liquid outlet on the first end. The second end preferably is closed by a detachable cover and the gas outlet is formed in the detachable cover.

Besides providing the separation unit with a metallic tube being closed on the first end and closing the metallic tube with a detachable cover on the second end, it is also possible to close the metallic tube on the second end wherein the gas outlet is provided in the closed second end and to close the first end by using a detachable cover which preferably is provided with a liquid outlet.

In a third alternative, the metallic tube is closed on the first and on the second end with a detachable cover wherein the detachable cover for closing the first end comprises the liquid outlet and the detachable cover for closing the second end comprises the gas outlet.

The detachable cover can be mounted on the metallic tube for example by an inside thread or by an outside thread. Further, the cover can be mounted on the metallic tube for example by a bayonet coupling or by using a clamp. However, it is particularly preferred to fasten the detachable cover on the metallic tube by an outside thread in the metallic tube and the respective inside thread on the detachable cover.

To obtain a sealed connection of the detachable cover on the metallic tube, it is further preferred when a sealing element is placed between the metallic tube and the detachable cover. The sealing element particularly preferably is an O-ring. By such a sealed connection of the cover on the metallic tube it is prevented that gas of the gas stream can leak from the separation unit.

Besides the detachable mounting of the cover on the metallic tube, it is also possible to attach the cover on the metallic tube by a non-detachable connection, for example by welding, soldering or gluing. However, as such a non-detachable connection does not allow opening the separation unit for cleaning, this is only reasonable for use in processes where no components may contaminate the separation unit. Therefore, it is particularly preferred to provide the separation unit with at least one detachably mounted cover.

The liquid separator preferably is placed at the inlet side of the gas outlet and fixed with the axis of the baffler. Particularly if the metallic tube is closed with a detachable cover on the second end, it is preferred that the liquid separator is placed in the detachable cover and fixed with the axis of the baffler. By placing the liquid separator in the detachable cover and fixing it with the axis of the baffler, during operation of the separation unit the liquid separator remains in its position. Further, the liquid separator easily can be changed in case it is soaked with liquid or blocked due to fouling by removing the detachable cover. Placing the liquid separator at the top of the metallic tube has the advantage that recovered liquid can drop back into the reservoir at the first end.

Particularly if the separation unit is used in processes which are carried out at elevated pressure or a pressure below ambient pressure, it is preferred to provide the liquid outlet with a suitable valve by which the liquid outlet can be closed. If the bottom of the separation unit is filled with liquid, the valve can be opened to withdraw the liquid from the bottom.

If the separation unit is used in a process where the liquid is recycled into the process, the liquid outlet preferably can be connected to a recycling line. In this case it is not necessary to provide the liquid outlet with a valve because the liquid can be continuously withdrawn from the separation unit and recycled into the process.

The gas outlet can be connected to a collecting unit, e.g. a gas burette or a pneumatic cylinder, for collecting the gas from which the liquid components were removed. The gas can also be fed into a flow meter to measure the flow and/or to an analytical instrument to directly determine the composition of the gas.

Preferably, the separation unit has an inner volume in the range from 1 to 1000 mL, more preferred in the range from 5 to 500 mL, and particularly in the range from 5 to 100 mL. The separation unit may be operated under pressure conditions in the range from 0.01 to 50 bara, preferably in the range from 0.1 to 20 bara, more preferred in the range from 1 to 15 bara. Particularly preferably, the separation unit is operated under pressure conditions in the range from 1.0 to 12 bara.

Further, the separation unit can be used in a wide range of temperature conditions which may range from -50 °C to 200 °C, preferably in the range from -20 °C to 180 °C, and particularly in the range from -10 °C to 100 °C.

The separation unit can be used in any process where liquid components or condensable components have to be removed from a gas stream. Particularly preferably, the separation unit is used for separating off liquid components from a hydrocarbon containing gas stream. Such a hydrocarbon containing gas stream for example may be obtained in a process for cracking hydrocarbons. In such processes, hydrocarbon reactant which is not cracked or hydrocarbons which are not cracked to the desired product can be removed by condensing and following separation of the liquid.

The separation unit preferably is designed such that it can be used in laboratory systems, particularly in laboratory systems for cracking hydrocarbons.

It is further preferred to use the separation unit in connection with laboratory testing systems which are used for testing catalysts and which are associated with the formation of fluid streams which comprise liquid and gaseous components and which require fast and precise separation and characterization of such fluid streams. The laboratory testing system for example may be a fixed-bed testing system or a fluid bed testing system.

The separation unit exhibits a high mechanical stability and robustness and therefore can be used in partly of fully automatized systems. The handling of the separation unit appears to be simple which supports the automatic attachment and detachment and/or the integration of the separation unit into the process control. The timing of the processes can be controlled very precisely by the opening and closing of the valves during stripping conditions. Reproducibility of the operation is ensured under various pressure and temperature conditions.

The inventive separation unit further allows for determining the amount of liquid sample which is being captured in the separation unit. In connection with determining the amount of liquid in the further components of the laboratory testing system, the total amount of liquid components can be determined. To quantify the amount of liquid which has been captured by the separation unit for example a precision balance can be used. Such a precision balance usually has a weighing precision which is higher than ± 100 mg, further preferably the weighing precision is higher than ± 10 mg, even more preferably the weighing precision is higher than ± 1 mg. Different possibilities exist to perform the weight determination. Preferably the balance is suitable for a total weight determination which is in the range of up to 30 kg or 5 kg. The characteristic range for the total weight range determination is associated with the weight of the separation unit itself. In a preferred embodiment of the use of the separation unit the weight of the separation unit is measured in order to quantify the amount of collected fluid which has been collected in the separation unit. In a preferred embodiment the weight determined is being performed before and after filling of the separation unit by means of a differential weight determination.

A process for determining the amount of liquid components in a two phase stream comprising a gaseous phase and liquid components comprises:
- passing the two phase stream through the separation unit as described above wherein the liquid components are captured in the separation unit;
- weighing the separation unit before and after passing the two phase stream through the separation unit on a precision balance;
- determining the amount of liquid captured in the separation unit by the difference in weight before and after passing the two phase stream though the separation unit.

By this process the amount of liquid components captured in the separation unit can be determined within the weighing precision of the balance. The volume of the liquid components captured in the separation unit then can be easily determined by multiplying the mass of the liquid components measured by weighing with the density of the liquid. A particularly accurate result can be achieved if the separation unit comprises the liquid separator and the weighing of the separation unit includes the liquid separator.

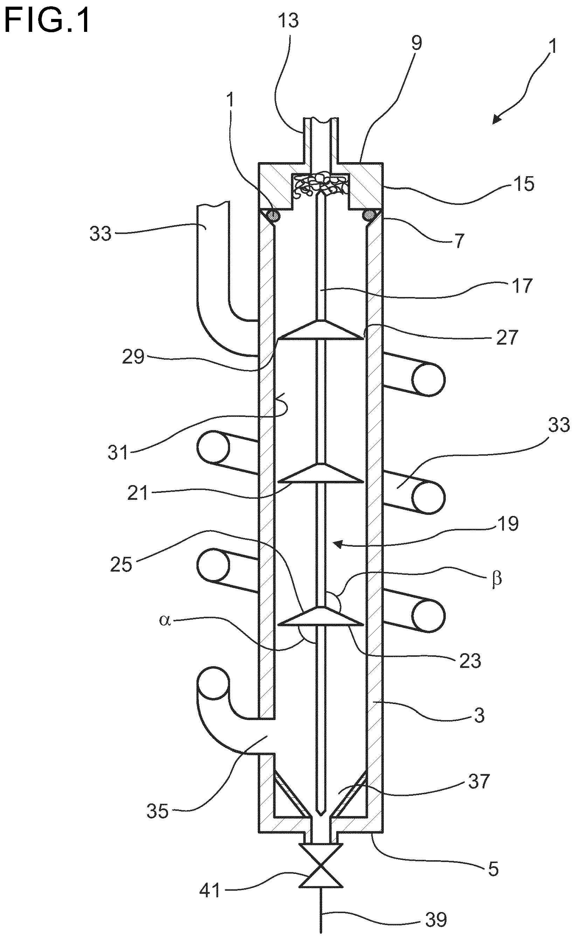

An illustrative embodiment of the invention is shown in the figure and explained in more detail in the following description.

The only figure shows a separation unit according to the invention.

A separation unit 1 comprises a metallic tube 3 having a first end 5 and a second end 7. In the embodiment shown in the figure, the metallic tube 3 is closed on its first end 5. The second end 7 is closed with a detachable cover 9. The detachable cover 9 can be fixed by any method known to a skilled person, for example by screwing or by using a bayonet coupling or a clamp. For a gastight connection, a sealing element 11 is placed between the metallic tube 3 and the detachable cover 9. A suitable sealing element 11 particularly is an O-ring.

In the detachable cover 9 a gas outlet 13 is formed. On the side which shows into the metallic tube 3, the gas outlet 13 is provided with a liquid separator 15. The liquid separator preferably is glass wool on which liquid droplets deposit when the gas flows through the liquid separator into the gas outlet 13.

The liquid separator 15 is hold in its position in the cover 9 by an axis 17 of a baffler 19. The baffler which is shown in the figure comprises 3 baffle plates 21. However, besides 3 baffles plates 21 as shown in the figure, the baffler 19 also may comprise more or less baffle plates 21, for example 1 to 20 baffle plates 21, preferably 1 to 10 baffle plates 21 and particularly 3 to 6 baffle plates 21. The side 23 showing to the first end 5 of the metallic tube 3 of each baffle plate encloses an angle α of 90° with the axis 17 of the baffler 19.

The side 25 of the baffle plates 21 showing to the second end 7 of the metallic tube 3 encloses an angle β between 90 and 150° with the axis 17 of the baffler 19, wherein the angle preferably is above 90°.

Each baffle plate 21 is designed such that there is a gap 27 between the rim 29 of each baffle plate 21 and the inner wall 31 of the metallic tube 3 in the range from 0.05 to 1 mm.

The separation unit 1 further comprises a supply pipe 33 through which a gas stream comprising liquid components or condensable components is fed to a side feed 35 in the metallic tube 3. The supply pipe 33 is spirally wound around the metallic tube 3.

During operation, a gas stream which comprises liquid components or condensable components enters the supply pipe 33 and flows through the supply pipe 33 to the side feed 35 where it enters the interior of the metallic tube 3. Particularly if the gas stream comprises condensable components, the gas stream is cooled in the supply pipe 33 such that the condensable components start to condense and form liquid droplets. For cooling it is for example possible to place the whole separation unit 1 into a cooling bath.

After having entered the interior of the metallic tube 3, the gas stream flows in direction of the gas outlet 13. To reach the gas outlet 13, the gas stream must pass the baffle plates 21 by flowing through the gap 27. This results in a deviation and acceleration of the gas stream. After passing the gap 27, the gas stream decelerates and opens into the whole space above the baffle plate 21. This repeats on each baffle plate 21. Due to their mass, the droplets formed in the gas stream deposit on the side 23 of the baffle plates 21 which shows to the first end 5 of the metallic tube 3. The droplets which deposited on the baffle plates 21 and further on the axis 17 of the baffler 19 and the inner wall 31 of the metallic tube 3 agglomerate and flow to the bottom 37 of the metallic tube 3. From the bottom 37 of the metallic tube 3, the liquid may be removed via a liquid outlet 39.

To avoid gas being removed from the separation unit 1 via the liquid outlet 39 or if the separation is carried out at elevated pressure or a pressure below atmospheric pressure, the liquid outlet 39 may be closed by a suitable valve 41. The valve 41 for example allows to remove liquid at predetermined times or when the liquid level exceeds a predetermined value. If liquid shall be removed after a predetermined level is exceeded, it is particularly preferred to provide a level sensor by which the liquid level can be determined. Such a liquid sensor either can be a sensor which measures the liquid level in the bottom 37 of the metallic tube 3 or a sensor which only provides a signal when the liquid level is such that the sensor comes into contact with the sensor. To withdraw the liquid from the separation unit in these cases the valve 41 either can be operated manually or automatically. If an automatic valve is used, it is particularly preferred when it closes as soon as a predetermined lower level is reached.

Particularly if not all of the liquid components have been separated off by the baffler, remaining droplets are separated from the gas stream in the liquid separator when the gas stream flows through the liquid separator into the gas outlet 13.

If the liquid remains in the liquid separator 15 and thus the liquid separator 15 becomes soaked with liquid or when the liquid separator 15 may become blocked by fouling, it will be necessary to change the liquid separator 15. Soaking or blocking by fouling of the liquid separator 15 for example can be determined by increasing pressure loss in the separation unit or by a reduced gas flow.

To change the liquid separator 15, the detachable cover 9 is removed and thus the liquid separator 15 is accessible and can be removed from the cover and be cleaned or replaced by a new liquid separator 15.

Besides a detachable cover 9 on the second end 7 of the metallic tube, it is also possible to close the metallic tube 3 on its first end with a detachable cover and on the second end with a fixed cover or to close the metallic tube 3 on its first end 5 and second end 7 with a detachable cover 9.

### List of reference numerals

- 1: separation unit
- 3: metallic tube
- 5: first end
- 7: second end
- 9: detachable cover
- 11: sealing element
- 13: gas outlet
- 15: liquid separator
- 17: axis
- 19: baffler
- 21: baffle plate
- 23: side showing to the first end 5
- 25: side showing to the second end 7
- 27: gap
- 29: rim
- 31: inner wall
- 33: supply pipe
- 35: side feed
- 37: bottom
- 39: liquid outlet
- 41: valve

## Claims

1. A separation unit for separating off liquid components from a gas stream comprising liquid components, the separation unit (1) comprising a tube (3) and a baffler (19), the tube (3) having a first end (5) and a second end (7) and being closed at the first and second ends (5, 7), the baffler (19) being placed inside the tube (3), and the tube (3) having a gas outlet (13) at the second end (7) and a side feed (35), wherein a supply pipe (33) is connected to the side feed (35), the supply pipe (33) having a length which is at least twice as long as the length of a pipe which runs parallel to the axis of the tube (3) from the second end (7) to the side feed (35), **characterized in that** the tube is a metallic tube (3) and the metallic tube (3) has the side feed (35) at the first end (5).

2. The separation unit according to claim 1, wherein a liquid separator (15) is placed between the baffler (19) and the gas outlet (13).

3. The separation unit according to claim 1 or 2, wherein the baffler (19) comprises a central axis (17) and 1 to 20 baffle plates (21).

4. The separation unit according to any of claims 1 to 3, wherein the supply pipe is spirally wound around the metallic tube (3).

5. The separation unit according to claim 3 or 4, wherein the central axis (17) and the side (23) of the baffle plates (21) showing to the first end (5) enclose an angle (α) of 90°.

6. The separation unit according to any of claims 3 to 5, wherein the axis (17) and the side (25) of the baffle plates (21) showing to the second end (7) enclose an angle (β) of 90 to 150°.

7. The separation unit according to any of claims 3 to 6, wherein a gap (27) of 0.05 and 1 mm is formed between each baffle plate (21) and the inner wall (31) of the metallic tube (3).

8. The separation unit according to any of claims 1 to 7, wherein the ratio of length of the metallic tube (3) to inner diameter of the metallic tube (3) is in the range from 1 to 125.

9. The separation unit according to any of claims 1 to 8, wherein the liquid separator (15) is made of mineral wool.

10. The separation unit according to any of claims 1 to 9, wherein the second end (7) is closed by a detachable cover (9) and the gas outlet (13) is formed in the detachable cover (9), and wherein the liquid separator (15) preferably is placed in the detachable cover (9) and fixed with the axis (17) of the baffler (19).

11. The separation unit according to any of claims 1 to 10, wherein the first end (5) is closed by a detachable cover and a liquid outlet (39) is formed in the detachable cover.

12. The separation unit according to any of claims 9 to 11, wherein a sealing element (11), preferably an O-ring, is placed between the metallic tube (3) and the detachable cover (9) to obtain a sealed connection.

13. Use of the separation unit according to any of claims 1 to 12 for separating off liquid components from a hydrocarbon containing gas stream.

14. The use according to claim 13, wherein the hydrocarbons containing gas stream is produced in a laboratory system for cracking hydrocarbons.

15. A process for determining the amount of liquid components in a two phase stream comprising a gaseous phase and liquid components, comprising:
- passing the two phase stream through the separation unit according to any of claims 1 to 12 wherein the liquid components are captured in the separation unit;
- weighing the separation unit before and after passing the two phase stream through the separation unit on a precision balance;
- determining the amount of liquid in the separation unit by the difference in weight before and after passing the two phase stream though the separation unit.

## Patentansprüche

1. Trenneinheit zum Abtrennen flüssiger Komponenten aus einem Gasstrom, der flüssige Komponenten umfasst, wobei die Trenneinheit (1) ein Rohr (3) und einen Prallkörper (19) umfasst, wobei das Rohr (3) ein erstes Ende (5) und ein zweites Ende (7) aufweist und an dem ersten und zweiten Ende (5, 7) geschlossen ist, wobei der Prallkörper (19) in dem Rohr (3) angeordnet ist und das Rohr (3) ein Gasauslass (13) an dem zweiten Ende (7) und eine Seitenzuführung (35) aufweist, wobei eine Zuleitung (33) an die Seitenzuführung (35) angeschlossen ist, wobei die Zuleitung (33) eine Länge aufweist, die wenigstens doppelt so lang ist wie die Länge eines Rohres, das parallel zu der Achse des Rohres (3) von dem zweiten Ende (7) zu der Seitenzuführung (35) verläuft, **dadurch gekennzeichnet, dass** das Rohr ein Metallrohr (3) ist und das Metallrohr (3) die Seitenzuführung (35) an dem ersten Ende (5) aufweist.

2. Trenneinheit nach Anspruch 1, wobei ein Flüssigkeitsseparator (15) zwischen dem Prallkörper (19) und dem Gasauslass (13) angeordnet ist.

3. Trenneinheit nach Anspruch 1 oder 2, wobei der Prallkörper (19) eine Mittelachse (17) und 1 bis 20 Prallplatten (21) umfasst.

4. Trenneinheit nach einem der Ansprüche 1 bis 3, wobei die Zuleitung spiralförmig um das Metallrohr (3) geschlungen ist.

5. Trenneinheit nach Anspruch 3 oder 4, wobei die Mittelachse (17) und die Seite (23) der Prallplatten (21), die zu dem ersten Ende (5) zeigt, einen Winkel (α) von 90° einschließen.

6. Trenneinheit nach einem der Ansprüche 3 bis 5, wobei die Achse (17) und die Seite (25) der Prallplatten (21), die zu dem zweiten Ende (7) zeigt, einen Winkel (β) von 90 bis 150° einschließen.

7. Trenneinheit nach einem der Ansprüche 3 bis 6, wobei ein Spalt (27) von 0,05 und 1 mm zwischen jeder Prallplatte (21) und der Innenwand (31) des metallischen Rohrs (3) gebildet ist.

8. Trenneinheit nach einem der Ansprüche 1 bis 7, wobei das Verhältnis der Länge des Metallrohrs (3) zu dem Innendurchmesser des Metallrohrs (3) in dem Bereich von 1 bis 125 liegt.

9. Trenneinheit nach einem der Ansprüche 1 bis 8, wobei der Flüssigkeitseparator (15) aus Mineralwolle besteht.

10. Trenneinheit nach einem der Ansprüche 1 bis 9, wobei das zweite Ende (7) mit einer lösbaren Abdeckung (9) verschlossen ist und der Gasauslass (13) in der lösbaren Abdeckung (9) gebildet ist, und wobei der Flüssigkeitsseparator (15) vorzugsweise in der lösbaren Abdeckung (9) angeordnet und mit der Achse (17) des Prallkörpers (19) fixiert ist.

11. Trenneinheit nach einem der Ansprüche 1 bis 10, wobei das erste Ende (5) mit einer lösbaren Abdeckung verschlossen ist und ein Flüssigkeitsauslass (39) in der lösbaren Abdeckung gebildet ist.

12. Trenneinheit nach einem der Ansprüche 9 bis 11, wobei ein Dichtungselement (11), vorzugsweise ein O-Ring, zwischen dem Metallrohr (3) und der lösbaren Abdeckung (9) angeordnet ist, um eine dichte Verbindung zu erhalten.

13. Verwendung der Trenneinheit nach einem der Ansprüche 1 bis 12 zum Abtrennen flüssiger Komponenten aus einem kohlenwasserstoffhaltigen Gasstrom.

14. Verwendung nach Anspruch 13, wobei der kohlenwasserstoffhaltige Gasstrom in einem Laborsystem zum Cracken von Kohlenwasserstoffen erzeugt wird.

15. Verfahren zur Bestimmung der Menge an flüssigen Komponenten in einem Zweiphasenstrom, der eine gasförmige Phase und flüssige Komponenten umfasst, umfassend:
- Leiten des Zweiphasenstroms durch die Trenneinheit nach einem der Ansprüche 1 bis 12, wobei die flüssigen Komponenten in der Trenneinheit gefangen werden;
- Wägen der Trenneinheit vor und nach Leiten des Zweiphasenstroms durch die Trenneinheit auf einer Präzisionswaage;
- Bestimmen der Menge an Flüssigkeit in der Trenneinheit durch die Differenz des Gewichts vor und nach Leiten des Zweiphasenstroms durch die Trenneinheit.

## Revendications

1. Unité de séparation destinée à séparer des composants liquides d'un courant gazeux comprenant des composants liquides, l'unité de séparation (1) comprenant un tube (3) et un déflecteur (19), le tube (3) ayant une première extrémité (5) et une deuxième extrémité (7) et étant fermé aux première et deuxième extrémités (5, 7), le déflecteur (19) étant placé à l'intérieur du tube (3), et le tube (3) ayant une sortie de gaz (13) à la deuxième extrémité (7) et une alimentation latérale (35), un tuyau d'approvisionnement (33) étant raccordé à l'alimentation latérale (35), le tuyau d'approvisionnement (33) ayant une longueur qui est au moins deux fois plus grande que la longueur d'un tuyau qui chemine parallèlement à l'axe du tube (3) de la deuxième extrémité (7) à l'alimentation latérale (35), **caractérisée en ce que** le tube est un tube métallique (3) et le tube métallique (3) a l'alimentation latérale (35) à la première extrémité (5).

2. Unité de séparation selon la revendication 1, dans laquelle un séparateur de liquide (15) est placé entre le déflecteur (19) et la sortie de gaz (13).

3. Unité de séparation selon la revendication 1 ou 2, dans laquelle le déflecteur (19) comprend un axe central (17) et 1 à 20 plaques déflectrices (21).

4. Unité de séparation selon l'une quelconque des revendications 1 à 3, dans laquelle le tuyau d'approvisionnement est enroulé en spirale autour du tube métallique (3).

5. Unité de séparation selon la revendication 3 ou 4, dans laquelle l'axe central (17) et le côté (23) des plaques déflectrices (21) tourné vers la première extrémité (5) forment un angle (α) de 90°.

6. Unité de séparation selon l'une quelconque des revendications 3 à 5, dans laquelle l'axe (17) et le côté (25) des plaques déflectrices (21) tourné vers la deuxième extrémité (7) forment un angle (β) de 90 à 150°.

7. Unité de séparation selon l'une quelconque des revendications 3 à 6, dans laquelle un espace (27) de 0,05 à 1 mm est formé entre chaque plaque déflectrice (21) et la paroi intérieure (31) du tube métallique (3).

8. Unité de séparation selon l'une quelconque des revendications 1 à 7, dans laquelle le rapport entre la longueur du tube métallique (3) et le diamètre intérieur du tube métallique (3) se situe dans la plage de 1 à 125.

9. Unité de séparation selon l'une quelconque des revendications 1 à 8, dans laquelle le séparateur de liquide (15) est constitué de laine minérale.

10. Unité de séparation selon l'une quelconque des revendications 1 à 9, dans laquelle la deuxième extrémité (7) est fermée par un couvercle amovible (9) et la sortie de gaz (13) est formée dans le couvercle amovible (9), et dans laquelle le séparateur de liquide (15) est de préférence placé dans le couvercle amovible (9) et fixé à l'axe (17) du déflecteur (19).

11. Unité de séparation selon l'une quelconque des revendications 1 à 10, dans laquelle la première extrémité (5) est fermée par un couvercle amovible et une sortie de liquide (39) est formée dans le couvercle amovible.

12. Unité de séparation selon l'une quelconque des revendications 9 à 11, dans laquelle un élément d'étanchéité (11), de préférence un joint torique, est placé entre le tube métallique (3) et le couvercle amovible (9) pour obtenir un raccord étanche.

13. Utilisation de l'unité de séparation selon l'une quelconque des revendications 1 à 12 pour la séparation de composants liquides d'un courant gazeux contenant des hydrocarbures.

14. Utilisation selon la revendication 13, dans laquelle le courant gazeux contenant des hydrocarbures est produit dans un système de laboratoire destiné au craquage d'hydrocarbures.

15. Procédé destiné à déterminer la quantité de composants liquides dans un courant biphasique comprenant une phase gazeuse et des composants liquides, comprenant :
- le passage du courant biphasique à travers l'unité de séparation selon l'une quelconque des revendications 1 à 12, les composants liquides étant capturés dans l'unité de séparation ;
- le pesage de l'unité de séparation avant et après le passage du courant biphasique à travers l'unité de séparation sur une balance de précision ;
- la détermination de la quantité de liquide dans l'unité de séparation par la différence de poids avant et après le passage du courant biphasique à travers l'unité de séparation.
